# EUROPEAN PATENT APPLICATION

(11) **EP 4 067 073 A1**
(43) Date of publication of application: **05.10.2022**
(21) Application number: 22162634.4
(22) Date of filing: 17.03.2022
(51) Int. Cl.: B32B 18/00, C01B 35/12, C04B 35/01, C04B 35/626, C04B 35/632, H01Q 1/00

(54) **A CERAMIC SUBSTRATE FOR MICROWAVE AND TERAHERTZ CIRCUITS BASED ON COPPER BORATES AND A METHOD FOR PRODUCING THIS SUBSTRATE.**

(30) Priority: 31.03.2021 PL 43751221
(71) Applicant: SIEC BADAWCZA LUKASIEWICZ - INSTYTUT MIKROELEKTRONIKI I FOTONIKI, 02-668 Warszawa (PL)
(72) Inventor: Szwagierczak, Dorota, 30-612 Krakow (PL); Synkiewicz, Beata, 31-804 Krakow (PL); Kulawik, Jan, 30-614 Krakow (PL)
(74) Representative: AOMB Polska Sp. z.o.o.

(57) **Abstract**

The subject matter of the invention is a ceramic substrate for microwave and terahertz circuits based on copper borates and a method for producing this substrate. The substrate in question is a ceramic shaped body or LTCC multilayer ceramics containing one of the copper borates CuB₂O₄, Cu₂B₂O₅ or Cu₃B₂O₆ or a mixture of CuB₂O₄ with Cu₂B₂O₅ or Cu₃B₂O₆. This substrate may contain up to 8% by weight of one of the additives lowering sintering , preferably CuBi₂O₄, AlF₃-CaB₄O₇, Li₂WO₄ or LiBO₂. The substrate exhibits a low dielectric constant of 5.4-6.6 and a low dissipaction factor of 0.001-0.012 in the frequency range of 0.2-2 THz.

In the method for producing a ceramic substrate according to the invention, a mixture of copper oxide CuO and boric acid H₃BO₃ is first prepared, after which the powder obtained from the solidstate synthesis reaction, containing one of the copper borates CuB₂O₄, Cu₂B₂O₅ or Cu₃B₂O₆ is milled in a ball mill for 5 - 8 h. Polyvinyl alcohol is added to the resulting powder or mixture of copper borate powders with sintering aids. The resulting granulate is pressed into pellets which are sintered at a temperature of 860 - 960°C for 2 - 4 hours. The substrate can also be produced by tape casting, lamination and co-firing of multilayer LTCC ceramics with screen-printed conductive layers at a temperature of 860-900°C for 1 - 2 hours.

## Description

The subject matter of the invention is a ceramic substrate for microwave and terahertz circuits based on copper borates and a method for producing this substrate. The substrate in this type of circuits should be characterised by low dielectric permittivity, low dielectric loss and low sintering temperature.

For technological reasons, especially the low sintering temperature (below 950°C) is very important as it enables the use of LTCC (low temperature co-fired ceramics) technology and allows the use of silver-based pastes, in particular low-cost and/or thick-film pastes. Such characteristics of the proposed material allow advanced substrates and packages for electronic circuits with a high degree of miniaturisation and integration to be produced.

From publication: J. Xi, F. Shang, F. Liu, J. Xu, G. Chen, A facile preparation of temperature stable borate ultra-low permittivity microwave ceramics for LTCC applications, Ceramics International 46 (2020) 19650-19653, microwave ceramics based on ZnB₂O₄ and CuB₂O₄ with the addition of Li₂O as a component for lowering the sintering temperature are known. The addition of Li₂O makes it possible to use LTCC technology to produce these ceramics. These ceramics are characterised by a low sintering temperature of 785°C, a very low dielectric permittivity of 2.86 at 16 GHz and a near-zero temperature coefficient of the resonance frequency (-2.2 ppm /°C). Based on TG/DSC tests, the authors of this publication assigned an exothermic peak at 731°C to the crystallisation of CuB₂O₄. The calculated value of the dielectric permittivity of CuB₂O₄ ceramics after taking into account the significant contribution of porosity is 5.09.

From publication: J. Xi, B. Lu, J. Chen, G. Chen, F. Shang, J. Xu, C. Zhou, C. Yuan, Ultra low sintering temperature and permittivity with excellent thermal stability in novel borate glass-ceramics, Journal of Non-Crystalline Solids, 521 (2019) 119527, a glass-ceramic material based on the CuO-ZnO-B₂O₃-Li₂O combination with a very low sintering temperature of 560-620°C is known. In this material, the presence of three borate crystalline phases Cu₂B₄O₇, ZnB₄O₇ and Li₂CuB₄O₈ was detected by X-ray analysis of samples sintered at 620°C. The resulting material was characterised by a very low dielectric constant of 3.33, a high Q x f value of 17.72 GHz and a very low temperature coefficient of the resonance frequency of 0-3 ppm/°C. Because of its excellent dielectric properties and co-sinterability with Ag and AI electrodes, the glass-ceramics is dedicated for use in various high-speed wireless communication systems manufactured with ULTCC (ultra low temperature co-fired ceramics) technology.

From European patent EP0021358B1, the use of anhydrous copper borate Cu₃B₂O₆ is known for producing a positively active material in an electrochemical generator with a lithium negative electrode and an electrolyte in the form of a liquid solution at room temperature, for which the solvent is an aprotic compound. Cu₃B₂O₆ material was obtained by heating B₂O₃ and CuO powders mixed in stoichiometric proportions, preferably at 900°C for 1h, milling and reheating at 900°C for 1h.

A different use of copper borates CuB₂O₄ and Cu₃B₂O₆ as promoters for electroless plating of non-metallic surfaces, such as plastic surfaces, is known from European patent EP2584064B1.

From Polish patent application P.437512, a ceramic substrate for microwave and terahertz circuits and a method for producing this substrate, filed with the Polish Patent Office on 31.03.2021, and from publication D. Szwagierczak, B. Synkiewicz-Musialska, J. Kulawik, N. Palka, Sintering, microstructure and dielectric properties of copper borates for high frequency LTCC applications, Materials, 14 (14) (2021) 4017, ceramic substrates are known which are based on copper borates CuB₂O₄ and Cu₃B₂O₆, produced by solid-state synthesis and sintering of compressed disks, intended for circuits operating at very high frequencies. These substrates are characterised by a low dielectric constant of 5.1-6.7 and a low dielectric loss in the frequency range of 0.14-0.7 THz. Thanks to their low sintering temperature of 900-960°C, they can be produced using LTCC (low temperature co-fired ceramics) technology.

From publication A. Sasidharanpillai, C.H. Kim, C. H. Lee, M.T. Sebastian, H.T. Kim, Environmental Friendly Approach for the Development of Ultra-Low-Firing Li2WO4 Ceramic Tapes, ACS Sustainable Chemistry & Engineering, 6 (5) (2018) 6849-6855, a method for producing ULTCC substrates based on Li₂WO₄ with an ultra-low firing temperature is known. In the slurry, polypropylene carbonate was used as a binder and environmentally friendly dimethyl carbonate was used as a solvent. The substrate, having been sintered at 650°C, exhibited excellent microwave dielectric properties - a low dielectric permittivity of 5.4, a very low dielectric loss of 9.21 × 10⁻⁵ for 5 GHz and the ability to co-fire with Ag electrodes.

From document CN105712704, the composition of a copper borate-containing ceramic substrate that is formed by sintering is known. However, this document does not teach about all possible methods for lowering the sintering temperature of such a material. Moreover, the document does not reveal methods for producing substrates using LTCC technology.

The object of the present invention is to develop a substrate intended for microwave and terahertz circuits, with low dielectric permittivity, low dielectric loss and low sintering temperature, and a method for producing the substrate allowing the use of LTCC technology and good cooperation with silver-based pastes.

The subject matter of the invention is a method for producing a ceramic substrate containing at least one copper borate, wherein the subsequent steps are carried out:
step 1 - mixing together copper oxide CuO and boric acid H₃BO₃ in the form of powders, in proportions corresponding to the stoichiometric composition of copper borate
step 2 - milling the mixture formed in step 1,
step 3 - pressing the products from step 2,
step 4 - carrying out the solid-state synthesis reaction of the compressed products formed in step 3,
step 5 - milling the products formed in step 4
step 6 - adding technological additives to the products formed in step 5 and forming a substrate therefrom,
step 7 - heat treatment of the formed substrate,
wherein step 4a is carried out before milling begins in step 5:
step 4a - adding to copper borate or to a mixture of copper borates an additive lowering the sintering temperature in an amount of 0-8% by weight, preferably in an amount of 1% by weight, 2% by weight, 3% by weight, 4% by weight, 5% by weight, 6% by weight or 7% by weight.

Preferably, the ceramic substrate is made of two copper borates, being CuB₂O₄ mixed with one of CU₂B₂O₅ or Cu₃B₂O₆,
wherein separate steps 1 to 4 are carried out for each of the copper borates used, after which they are combined and milled together in step 5.

Preferably, in step 4a the additive lowering sintering temperature is CuBi₂O₄, AIF₃-CaB₄O₇, Li₂WO₄ or LiBO₂.

Preferably, milling in step 2 is carried out for at least 5h.

Preferably, the solid state synthesis reaction is carried out at a temperature of 600 to 700°C for at least 4h.

Preferably, the technological additive in step 6 is polyvinyl alcohol.

Preferably, the heat treatment in step 7 comprises sintering the formed substrates at a temperature of 860 to 960°C for at least 1 h.

Preferably, in step 6
the technological additive to the products from step 5 constituting the inorganic part are organic compounds, i.e.
a binder, preferably polyvinyl butyral in an amount of 10-16% by weight of the inorganic part, a plasticiser, preferably a mixture of alkylbenzyl phthalate and polyethylene glycol in an amount of 5-10% by weight of the inorganic part,
a dispersant, preferably fish oil in an amount of 1-2.5% by weight of the inorganic part, and a solvent, preferably a mixture of isopropyl alcohol and toluene in an amount of 50-100% by weight of the inorganic part,
wherein the technological additives and the products formed in step 5 are mixed together in a mill, preferably a ball mill, until a slurry is obtained, whereupon the resulting slurry is cast until a tape of 80-200 micrometers thick is obtained, whereupon the resulting tape is cut into green sheets, whereupon conductive layers are deposited onto at least some of the green sheets, whereupon the green sheets with the conductive layers are stacked and laminated together to obtain a formed LTCC substrate.

Preferably, in step 6 the conductive layers are applied, preferably by screen printing, from the conductive paste.

Preferably, 5 to 30 green sheets are stacked in step 6.

Preferably, in step 6 the lamination of the stacks of green sheets is carried out at a pressure of 10-40 MPa at a temperature of 50-70 °C and for 10-30 minutes.

Preferably, in step 7 the heat treatment is carried out by firing the formed LTCC substrate at a temperature of 860 to 900 °C.

The subject matter of the invention is also a ceramic substrate obtained by the method according to the invention.

Moreover, the subject matter of the invention is also a ceramic substrate for use in microwave and terahertz circuits, intended to be used as a substrate or package for microwave and terahertz electronic circuits, preferably in antenna packages for wireless communication devices made with LTCC technology.

Moreover, yet another subject matter of the invention is an electronic component comprising the ceramic substrate according to the invention, for use in high frequency technologies, preferably in 4G, 5G, 6G technologies .

The ceramic substrate according to the invention is a ceramic shaped body or LTCC multilayer ceramic comprising one of copper borates CuB₂O₄, CU₂B₂O₅ or Cu₃B₂O₆ or a mixture of CUB₂O₄ with CU₂B₂O₅ or Cu₃B₂O₆, which may contain an additive lowering sintering temperature in the form of CuBi₂O₄ or AlF₃-CaB₄O₇, or Li₂WO₄, or LiBO₂ added prior to milling.

The substrate according to the invention can be made by pressing and sintering as bulk ceramics or by tape casting, isostatic lamination and co-sintering of ceramic tapes and metallic layers as multilayer LTCC ceramics.

In the method according to the invention, in its initial steps, solid-state synthesis of copper borates is carried out. A mixture of copper oxide CuO and boric acid H₃BO₃ is prepared from amounts weighed in stoichiometric molar proportions, milled in a ball mill for 5 - 8 h, and pressed into pellets. Then, the solid-state reaction is carried out at a temperature of 600 - 700°C for 5 - 8 hours, after which the resulting, roughly ground powder containing copper borate CuB₂O₄, Cu₂B₂O₅ or Cu₃B₂O₆ is milled in a ball mill for 5 - 8 hours. In order to obtain a substrate of copper borate CuB₂O₄, the mixture of copper oxide CuO and boric acid H₃BO₃ is mixed in a molar ratio of 1:2, in order to obtain a substrate of copper borate Cu₂B₂O₅, the mixture of copper oxide CuO and boric acid H₃BO₃ is mixed in a molar ratio of 1:1, and in order to obtain a substrate of copper borate Cu₃B₂O₆, the mixture of copper oxide CuO and boric acid H₃BO₃ is mixed in a molar ratio of 3: 2. Before milling, CuBi₂O₄ or AlF₃-CaB₄O₇, or Li₂WO₄, or LiBO₂ is added in an amount of 0 - 8% by weight to the powder of one of the copper borates or to the mixture of CuB₂O₄ with CU₂B₂O₅ or Cu₃B₂O₆ powders.

In the case of the method for producing a ceramic substrate according to the invention, aiming at obtaining a substrate in the form of a ceramic body, after carrying out the above-mentioned initial steps, polyvinyl alcohol is added to the obtained powder of one of the copper borates or the mixture of CuB₂O₄ with CU₂B₂O₅ or Cu₃B₂O₆ powders, preferably 1% by weight of polyvinyl alcohol, especially in the form of a 3% aqueous solution, and from the granulate thus obtained, pellets are pressed which are then sintered at a temperature in the range 860 - 960°C, preferably for 2 - 4 hours.

In the case of the method for producing a ceramic substrate according to the invention, aiming at obtaining a substrate in the form of multilayer LTCC ceramics, having carried out the above-mentioned initial steps, the milled powder of one of the copper borates or a mixture of CuB₂O₄ with CU₂B₂O₅ or Cu₃B₂O₆ powders is used to produce a slurry for tape casting, and then used to produce multilayer LTCC substrates in a process comprising tape casting, laser cutting of green sheets, deposition onto, at least some of the sheets, conductive layers, preferably by screen printing, and then stacking the sheets, isostatic lamination and co-firing the ceramic and metallic layers.

The ceramic substrate according to the invention is characterised by a low sintering temperature of 860-960°C, a dielectric constant of 5.4-6.6 and a dissipation factor of 0.004-0.012 in the frequency range of 0.2-2 THz, and the ability to co-sinter with commercial thick-layer Ag-Pd-based pastes.

The invention will be explained in more detail with three examples.

In the first example, two variants of the ceramic substrate were made, one substrate of pure copper borate CuB₂O₄, and the other of pure copper borate Cu₂B₂O₅.

In both variants (substrates of pure CuB₂O₄ and Cu₂B₂O₅), CuB₂O₄ or CU₂B₂O₅ powder was first synthesised by solid-state reaction. For this purpose, mixtures of copper oxide CuO and boric acid H₃BO₃ were weighed in stoichiometric molar ratios corresponding to the respective compounds, 1:2 for CuB₂O₄ and 1:1 for Cu₂B₂O₅, respectively. Then, the powder mixtures were milled in a ball mill, pressed into pellets and calcined at the temperature of 700°C for 5 hours. The resulting synthesis products were milled in a ball mill for 7 hours. To each of the powders obtained, 1% by weight of polyvinyl alcohol was added as a 3% aqueous solution. Pellets were pressed from the prepared granulates and sintered, in the case of CuB₂O₄ for 2 hours at the temperature of 940°C and in the case of CU₂B₂O₅ for 4 hours at the temperature of 950°C. The ceramic substrate obtained from pure CuB₂O₄ was characterised by a low dielectric constant of 5.4 -5.8 in the range of 0.1-2 THz and a low dissipation factor of 0.001-0.01 for the range of 0.3-0.8 THz, whereas the ceramic substrate obtained from pure borate CU₂B₂O₅ was characterised by a low dielectric constant of 6.1-6.5 in the range of 0.1-0.9 THz and a low dissipation factor of 0.001-0.01 for the range of 0.2-0.8 THz.

In the second example, a ceramic substrate based on CuB₂O₄ with the addition of 5% CuBi₂O₄ was prepared. To produce this substrate, CuB₂O₄ was first synthesised by solid-state reaction. The starting powders in the form of CuO and H₃BO₃ were weighed in a molar ratio of 1:2, mixed in a ball mill, pressed and synthesised at the temperature of 700°C for 5 hours. Then, the synthesis of CuBi₂O₄ was carried out by solid-state reaction. The starting CuO and Bi₂O₃ powders were weighed at a molar ratio of 1:1, mixed in a ball mill, pressed and synthesised at the temperature of 700°C for 4 hours. The CuB₂O₄ powder obtained after the synthesis process was milled in a ball mill for 7 hours with the addition of 5% by weight of CuBi₂O₄ as a sintering aid-. From the resulting fine-grained CuB₂O₄ powder with the addition of 5% CuBi₂O₄, pellets were made by uniaxial pressing. The sintering aid can also be AlF₃-CaB₄O₇, Li₂WO₄ or LiBO₂, also in amounts of 0 - 8% by weight, e.g. in amounts of 1% by weight, 2% by weight, 3% by weight, 4% by weight, 5% by weight, 6% by weight or 7% by weight. The pellets were sintered at the temperature of 880°C for 2h. The ceramic substrate according to the invention based on CuB₂O₄ with the addition of 5% CuBi₂O₄ is characterised by a low dielectric constant of 5.6 - 6.6 at very high frequencies for the range of 0.1 - 0.9 THz and a low dissipation factor of 0.001- 0.01 for the range of 0.2 - 0.8 THz.

In the third example, a ceramic substrate was prepared as multilayer LTCC ceramic based on a mixture of 75% by weight of CuB₂O₄ and 25% by weight of Cu₃B₂O₆ with the addition of 5% Li₂WO₄. To produce this substrate, CuB₂O₄ was first synthesised by solid-state reaction. The starting powders in the form of CuO and H₃BO₃ were weighed in a molar ratio of 1:2, mixed in a ball mill, pressed and synthesised at the temperature of 700°C for 5 hours. Then, the synthesis of Cu₃B₂O₆ was carried out by solid-state reaction. The starting CuO and H₃BO₃ powders were weighed at a molar ratio of 3:2, mixed in a ball mill, pressed and synthesised at the temperature of 700°C for 4 hours. The CuB₂O₄ and Cu₃B₂O₆ powders obtained after the synthesis process were mixed at a 3:1 weight ratio and then milled in a ball mill for 7 hours with 5% by weight of Li₂WO₄ as a sintering aid. The powder obtained after milling constituted the inorganic part of the slurry for tape casting. The following were added as the organic part of the slurry: polyvinyl butyral, acting as a binder, in an amount of 10-16 wt% of the inorganic part, a mixture of alkylbenzyl phthalate and polyethylene glycol in a 1:1 ratio, acting as a plasticiser, in an amount of 5-10% by weight of the inorganic part, fish oil, acting as a dispersant, in an amount of 1-2.5% by weight of the inorganic part, and a mixture of isopropyl alcohol and toluene in a 1:1 ratio, acting as a solvent, in an amount of 50-100% by weight of the inorganic part. The organic and inorganic parts of the slurry were mixed in a ball mill for 6 hours. Then, ceramic tapes with a thickness of 80-200 micrometres in a dried state were obtained using a tape caster. Smaller sheets were laser-cut from the ceramic tapes. Test patterns from AgPd conductive paste were screen-printed onto some of the sheets. Green sheets in an amount of 5-20 were stacked and laminated in an isostatic press under a pressure of 10-40 MPa at the temperature of 70°C for 10-30 min. Then, the ceramic and metallic layers were co-fired at a temperature of 860-900°C to obtain the LTCC substrate. During the firing process, organic components were removed from green ceramic tape and conductive layers.

The LTCC ceramic substrate according to the invention based on a mixture of 75% by weight of CuB₂O₄ and 25% by weight of Cu₃B₂O₆ with the addition of 5% Li₂WO₄ after firing at the temperature of 860°C is characterised by a low dielectric constant of 5.4 - 5.7 at very high frequencies for the range of 0.2 - 2 THz and a low dissipation factor of 0.006 - 0.016 for the range of 0.2 - 2 THz.

The present invention is also applicable to the fabrication, with the use of ceramic substrates according to the invention, of electronic components for use in high frequency technologies. The technologies in question are 4G and 5G communication technologies already in use today, as well as technologies currently under development - i.e. terahertz 6G technologies.

## Claims

1. A method for producing a ceramic substrate comprising at least one copper borate, wherein the subsequent steps are carried out:
step 1 - mixing together copper oxide CuO and boric acid H₃BO₃ in the form of powders, in proportions corresponding to the stoichiometric composition of copper borate
step 2 - milling the mixture formed in step 1,
step 3 - pressing the products from step 2,
step 4 - carrying out the solid-state synthesis reaction of the compressed products formed in step 3,
step 5 - milling the products formed in step 4
step 6 - adding technological additives to the products formed in step 5 and forming a substrate therefrom,
step 7 - heat treatment of the formed substrate,
**characterised in that** step 4a is carried out before milling begins in step 5:
step 4a - adding to copper borate or to a mixture of copper borates an additive lowering the sintering temperature in an amount of 0-8% by weight, preferably in an amount of 1% by weight, 2% by weight, 3% by weight, 4% by weight, 5% by weight, 6% by weight or 7% by weight.

2. The method according to claim 1, **characterised in that** the ceramic substrate is made of two copper borates, being CuB₂O₄ mixed with one of CU₂B₂O₅ or Cu₃B₂O₆,
wherein separate steps 1 to 4 are carried out for each of the copper borates used, after which they are combined and milled together in step 5.

3. The method according to claim 1 or 2, **characterised in that** in step 4a, the additive lowering sintering temperature is CuBi₂O₄, AlF₃-CaB₄O₇, Li₂WO₄ or LiB02.

4. The method according to any one of the preceding claims 1 to 3, **characterised in that** the milling in step 2 is carried out for at least 5h.

5. The method according to any one of the preceding claims 1 to 4, **characterised in that** the solid-state synthesis reaction is carried out at a temperature of 600 to 700°C for at least 4h.

6. The method according to any one of the preceding claims 1 to 5, **characterised in that** the technological additive in step 6 is polyvinyl alcohol.

7. The method according to any one of the preceding claims 1 to 6, **characterised in that** the thermal treatment in step 7 comprises sintering the formed substrates at a temperature of 860 to 960°C for at least 1 h.

8. The method according to any one of the preceding claims 1 to 5, **characterised in that** in step 6, the technological additive to the products from step 5 constituting the inorganic part are organic compounds, i.e.
a binder, preferably polyvinyl butyral in an amount of 10-16% by weight of the inorganic part, a plasticiser, preferably a mixture of alkylbenzyl phthalate and polyethylene glycol in an amount of 5-10% by weight of the inorganic part,
a dispersant, preferably fish oil in an amount of 1-2.5% by weight of the inorganic part, and a solvent, preferably a mixture of isopropyl alcohol and toluene in an amount of 50-100% by weight of the inorganic part,
wherein the technological additives and the products formed in step 5 are mixed together in a mill, preferably a ball mill, until a slurry is obtained, whereupon the resulting slurry is cast until a tape of 80-200 micrometers thick is obtained, whereupon the resulting tape is cut into green sheets, whereupon conductive layers are deposited onto at least some of the green sheets, whereupon the green sheets with the conductive layers are stacked and laminated together to obtain a formed LTCC substrate.

9. The method according to claim 8, **characterised in that** in step 6, the conductive layers are deposited, preferably by screen printing, from a conductive paste.

10. The method according to one of claims 8 or 9, **characterised in that** 5 to 30 green sheets are stacked in step 6.

11. The method according to one of claims 8, 9 or 10, **characterised in that** in step 6, the lamination of the stack of green sheets is carried out at a pressure of 10-40 MPa at a temperature of 50-70 °C and for 10-30 minutes.

12. The method according to one of claims 8, 9, 10 or 11, **characterised in that** in step 7, the heat treatment is carried out by firing the formed LTCC substrate at a temperature of 860 to 900 °C.

13. A ceramic substrate, obtained by the method of any one of claims 1 to 12.

14. A ceramic substrate for use in microwave and terahertz circuits, intended for use as a substrate or package for microwave and terahertz electronic circuits, preferably in antenna packages for wireless communication devices made with the use of LTCC technology.

15. An electronic component comprising the ceramic substrate according to claims 13 or 14 for use in high frequency technologies, preferably in 4G, 5G, 6G technologies.
